# EUROPEAN PATENT APPLICATION

(11) **EP 4 468 481 A1**
(43) Date of publication of application: **27.11.2024**
(21) Application number: 22960263.6
(22) Date of filing: 30.09.2022
(51) Int. Cl.: H01M 50/244, H01M 50/227

(54) **BATTERY BOX, BATTERY, ELECTRIC DEVICE, AND METHOD AND DEVICE FOR MANUFACTURING BOX**

(71) Applicant: Contemporary Amperex Technology Co., Limited, Ningde, Fujian 352100 (CN)
(72) Inventor: YUE, Guicheng, Ningde, Fujian 352100 (CN); PAN, Xin, Ningde, Fujian 352100 (CN); LI, Honglei, Ningde, Fujian 352100 (CN); CHEN, Zhiming, Ningde, Fujian 352100 (CN); KE, Qingpeng, Ningde, Fujian 352100 (CN); WANG, Yong, Ningde, Fujian 352100 (CN)
(74) Representative: Kraus & Lederer PartGmbB
(86) International application number: PCT/CN2022/123169
(87) International publication number: WO 2024/065640

(57) **Abstract**

Embodiments of this application provide a box of a battery, a battery, an electric device, and a method and a device for manufacturing a box. The box of the battery includes: a first portion, where the first portion is an integrated hollow structure with an opening at one end, the first portion includes a plurality of walls, and at least one wall of the plurality of walls is provided with a reinforcement member. The box of the battery, battery, electric device, and method and device for manufacturing a box of a battery in the embodiments of this application can enhance the structural strength of the box, thereby improving the safety of the battery.

## Description

### TECHNICAL FIELD

This application relates to the field of battery technologies, and in particular, to a box of a battery, a battery, an electric device, and a method and device for manufacturing a battery box.

### BACKGROUND

Energy conservation and emission reduction are crucial to sustainable development of the automobile industry. In this context, electric vehicles, with their advantages in energy conservation and environmental protection, have become an important part of sustainable development of the automobile industry. For electric vehicles, battery technology is an important factor in connection with their development. With the rapid development of battery technologies, enhancing the safety performance of batteries is an urgent technical problem that needs to be solved in battery technologies.

### SUMMARY

Embodiments of this application provide a box of a battery, a battery, an electric device, and a method and a device for manufacturing a box, which can enhance the structural strength of the box, thereby improving the safety of the battery.

According to a first aspect, a box of a battery is provided, including a first portion, where the first portion is an integrated hollow structure with an opening at one end, the first portion includes a plurality of walls, and at least one wall of the plurality of walls is provided with a reinforcement member.

Therefore, the box of a battery in the embodiments of this application includes a first portion, which is an integrated hollow structure with an opening at one end. This means that no additional protective component needs to be provided for the box, in other words, the protective component and a side wall of the box can be provided as an integrated structure. This not only ensures the air-tightness of the box, further enhancing the safety of the battery, and moreover, it eliminates the use of bolts and other connecting members, as well as the need for methods such as welding or adhesive bonding for connection. The structure is simple, easy to manufacture, and is also conducive to reducing the weight of the box. In addition, the first portion includes a plurality of walls, and at least one of the plurality of walls is provided with a reinforcement member. Due to the integrated structure of the first portion, the plurality of walls included by the first portion are no longer provided with connecting members such as bolts. Additionally, there are no connecting regions such as weld seams between protective components and side walls of the box. Therefore, a reinforcement member can be provided on any one or more of the plurality of walls, and the reinforcement member will not be limited by connecting members such as bolts, or connecting regions such as weld seams. This facilitates processing and increases the structural strength of the wall where the reinforcement member is located, thereby enhancing the structural strength of the box and the structural strength and safety of the battery.

In some embodiments, the plurality of walls include a side wall of the first portion, where the side wall is provided with a first reinforcement structure, the first reinforcement structure is configured to strengthen the structural strength of the side wall, and the reinforcement member includes the first reinforcement structure. Through the provision of the first reinforcement structure on the side wall, the structural strength of the side wall can be increased, thereby improving the structural strength and safety of the battery.

In some embodiments, the first reinforcement structure is provided on an outer surface of the side wall, the outer surface of the side wall being a surface of the side wall facing towards the exterior of the battery. In this way, the first reinforcement structure does not need to occupy space inside the battery, which is conducive to improving space utilization of the plurality of cells inside the battery, and thus improving the energy density of the battery.

In some embodiments, a side wall of the first portion is provided with a plurality of stiffeners protruding from a surface of the side wall, and the first reinforcement structure includes the plurality of stiffeners. The provision of the plurality of stiffeners as the first reinforcement structure of the side wall not only facilitates processing, but also allows for flexible adjustment of at least one of the distance between the stiffeners, the thickness of each stiffener, and the protrusion height of each stiffener according to the strength requirements of the side wall to obtain an appropriate first reinforcement structure that meets the structural strength requirements of the first portion while also satisfying the weight requirements of the battery.

In some embodiments, the plurality of stiffeners are evenly distributed on the surface of the side wall. The plurality of stiffeners are evenly distributed on the side wall according to a certain rule so as to ensure the structural stability of different locations of the side wall, and to avoid significant differences in structural strength at different locations of the side wall due to the provision of stiffeners only in a localized region.

In some embodiments, the plurality of walls include a bottom wall of the first portion, where the bottom wall is provided with a second reinforcement structure, the second reinforcement structure is configured to strengthen the structural strength of the bottom wall, and the reinforcement member includes the second reinforcement structure.

The bottom wall of the first portion is typically configured to support a plurality of battery cells within the box, that is, the bottom wall needs to bear the weight of the plurality of battery cells. Therefore, the bottom wall generally needs to have higher structural strength. Through the provision of the second reinforcement structure, the structural strength of the bottom wall can be increased, thereby improving the structural strength and safety of the battery. In addition, considering that when the battery is installed in a vehicle, the bottom wall of the battery may be damaged by external forces, for example, it may be subjected to external impacts by particles such as gravel. Therefore, the addition of the second reinforcement structure may increase the structural strength of the bottom wall, preventing the box from being damaged by the impact of the external forces, and thus improving the safety of the battery.

In some embodiments, the second reinforcement structure includes a honeycomb structure. The honeycomb structure is relatively stable, evenly distributes forces, and can enhance the structural strength and stability of the bottom wall while being easy to manufacture.

In some embodiments, at least one beam is provided on a side of the bottom wall facing towards the interior of the battery, and the second reinforcement structure includes the at least one beam. The beam is provided in a simple manner for easy processing. The beam may be provided in a plate-like structure to be stacked with the bottom wall, so that each beam occupies a small internal space of the box of the battery and slightly affects the space occupancy of the battery cells in the battery. The beam can also increase the strength of the bottom wall, improve the ability of the bottom wall to bear a plurality of the battery cells, and thereby improve the structural strength and safety of the battery.

In some embodiments, the at least one beam includes a plurality of beams spaced apart. The plurality of beams spaced apart can strengthen the structural strength of different regions of the bottom wall, making the bottom wall more stable.

In some embodiments, the material of the first portion is a polymer material. In this way, the first portion can be processed in at least one of the following ways: injection molding, compression molding, blowing, and casting. Thus, an integrated first portion can be obtained. In addition, compared with a first portion made of metal, the first portion of polymer material is lighter in weight, which can reduce the overall weight of the battery.

In some embodiments, the polymer material includes at least one of the following materials: thermoplastic material, thermosetting material, and composite material. This allows for flexible selection based on the specific application requirements.

In some embodiments, the box further includes a second portion for covering the opening of the first portion, thereby forming an accommodating space for accommodating battery cells.

According to a second aspect, a battery is provided, including a plurality of battery cells; and the box according to the first aspect, where the box is configured to accommodate the plurality of battery cells.

According to a third aspect, an electric device is provided, including the battery according to the second aspect, where the battery is configured to supply electric energy to the electric device.

In some embodiments, the electric device may be a vehicle, a ship, or a spacecraft.

According to a fourth aspect, a method for manufacturing a box for a battery is provided, including processing a first portion using at least one of the following methods: injection molding, compression molding, blowing, and casting, where the first portion is an integrated hollow structure with an opening at one end, the first portion includes a plurality of walls, and at least one wall of the plurality of walls is provided with a reinforcement member.

According to a fifth aspect, a device for manufacturing a box of a battery is provided, including a module for performing the method according to the fourth aspect.

### BRIEF DESCRIPTION OF DRAWINGS

FIG. 1 is a schematic structural diagram of a vehicle according to an embodiment of this application;
FIG. 2 is a schematic structural exploded view of a battery according to an embodiment of this application;
FIG. 3 is a schematic diagram of a structure of a first portion of a box according to an embodiment of this application;
FIG. 4 is a schematic top view of a structure of a first portion of a box according to an embodiment of this application;
FIG. 5 is a schematic diagram of another structure of a first portion of a box according to an embodiment of this application;
FIG. 6 is a schematic diagram of a partial structure of a first portion of a box according to an embodiment of this application;
FIG. 7 is a schematic flowchart of a method for manufacturing a box of a battery according to an embodiment of this application; and
FIG. 8 is a schematic block diagram of a device for manufacturing a box of a battery according to an embodiment of this application.

The accompanying drawings are not drawn to scale.

Reference signs are described as follows:
1. vehicle; 30. controller; 40. motor; 10. battery; 20. battery cell; 11. box; 12. first portion; 13. second portion; 121. opening; 122. side wall; 1221. first side wall; 1222. second side wall; 1223. first reinforcement structure; 1223a. first reinforcement structure of the first side wall; 1223b. first reinforcement structure of the second side wall; 123. bottom wall; 1231. second reinforcement structure; 1232. honeycomb structure; 1233. rectangular structure; 1234. beam.

### DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures, and do not limit the specific structure of the application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. The battery cell mainly relies on movement of metal ions between a positive electrode plate and a negative electrode plate to work. The positive electrode plate includes a positive electrode current collector and a positive electrode active substance layer. The positive electrode active substance layer is coated on a surface of the positive electrode current collector, and a current collector uncoated with the positive electrode active substance layer protrudes from the current collector coated with the positive electrode active substance layer and serves as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is coated on a surface of the negative electrode current collector. A current collector uncoated with the negative electrode active substance layer protrudes from the current collector coated with the negative electrode active substance layer and serves as a negative tab. The negative electrode current collector may be made of copper, and the negative electrode active substance may be carbon, silicon, or the like. To allow a large current to pass through without any fusing, multiple positive tabs are provided and stacked together, and multiple negative tabs are provided and stacked together. The material of the separator may be polypropylene (polypropylene, PP) or polyethylene (polyethylene, PE), or the like. In addition, the electrode assembly may be a wound structure or a stacked structure. However, this is not limited in the embodiments of this application.

For the development of battery technologies, many design factors need to be considered, for example, performance parameters such as energy density, cycle life, discharge capacity, and charge and discharge rate, as well as safety of the battery. For batteries, safety hazards mainly originate in charging and discharging. Therefore, in order to improve the safety performance of batteries, a pressure relief mechanism is often provided for battery cells. The pressure relief mechanism is an element or part that is actuated when internal pressure or temperature of the battery cell reaches a predetermined threshold, so as to release the internal pressure or temperature. The predetermined threshold may be adjusted according to different design requirements. For example, the predetermined threshold may depend on the material used for one or more of a positive electrode plate, a negative electrode plate, an electrolyte, and a separator in the battery cell. The pressure relief mechanism may employ an element or part sensitive to pressure or temperature such that the pressure relief mechanism is actuated when the internal pressure or temperature of the battery cell reaches the predetermined threshold, thereby forming a channel for relieving the internal pressure or temperature.

When the pressure relief mechanism is actuated, the high-temperature and high-pressure substances inside the battery cell are discharged as emissions from an actuated site. In this way, the battery cell can relieve its pressure and temperature under controllable pressure or temperature, thereby avoiding more serious potential incidents. The emissions from the battery cell mentioned in this application include but are not limited to: electrolyte, fragments of positive and negative electrode plates and separators because of dissolution or breaking, high-temperature and high-pressure gases and flames produced by reactions, and the like.

To ensure the output voltage or current of a battery, it is often necessary to electrically connect a plurality of battery cells to each other through a busbar. The emissions from the inside of a battery cell may cause a short circuit in other battery cells. For example, when discharged metal filings electrically connect two busbars, a short circuit may occur in the battery, posing a safety hazard. In addition, the high-temperature and high-pressure emissions are discharged toward a direction in which the pressure relief mechanism of the battery cell is provided, and more specifically, may be discharged toward a region in which the pressure relief mechanism is actuated. The power and destructive force of such emissions may be great, and may even be enough to break through one or more structures in that direction, causing further safety issues. Therefore, it is common to dispose of the emissions through the provision of a thermal management component.

For example, the thermal management component may be utilized as a wall of the box of the battery so that the thermal management component and other walls of the box enclose an electrical chamber for accommodating the battery cell. Specifically, the box of the battery may include at least two portions, for example, the at least two portions may include a first portion and a second portion, where the first portion may include two opening ends, the second portion may be configured to cover one of the opening ends, and the thermal management component is configured to cover the other opening end to form the electrical chamber.

In this way, when the pressure relief mechanism is actuated, emissions from a battery cell can be discharged out of the electrical chamber through the thermal management component, or only a small amount of the emissions enter the electrical chamber, thereby reducing the influence of the emissions on the busbar in the electrical chamber, enhancing the safety of the battery. In addition, the thermal management component may further be configured to accommodate fluid to regulate temperatures of a plurality of battery cells. The fluid here may be liquid or gas, and regulating temperatures refers to heating or cooling the plurality of battery cells. In the case of cooling or lowering the temperature of the battery cell, the thermal management component is configured to accommodate cooling fluid to lower the temperature of a plurality of battery cells or cool down the emissions discharged through the pressure relief mechanism. In this case, the thermal management component may also be referred to as a cooling component, a cooling system, a cooling plate, or the like, and the fluid accommodated therein may also be referred to as a cooling medium or cooling fluid, and more specifically, cooling liquid or cooling gas. Alternatively, the thermal management component may also be configured to heat up the plurality of battery cells. This is not limited in the embodiments of this application. Optionally, the fluid may flow circularly to achieve a better temperature adjustment effect. Optionally, the fluid may be water, a liquid mixture of water and ethylene glycol, air, or the like.

Due to the presence of fluid within the thermal management component, which serves as a wall of the box, its overall structural strength is limited. To protect the thermal management component from failure due to damage by external forces, a protective component can usually be provided on the outside of the thermal management component. On one hand, the protective component protects the thermal management component from damage by external forces. For example, for a battery mounted on a vehicle, the protective component prevents the thermal management component from being damaged by flying stones or other particles while the vehicle is in motion. On the other hand, a cavity may be formed between the protective component and the thermal management component, and the cavity is configured as a collection cavity, which may be used to collect emissions that pass through the thermal management component and exit the electrical chamber. In this way, emissions of the battery cell discharged through the pressure relief mechanism can pass through the thermal management component into the collection cavity and be collected by the collection cavity. This has a buffering effect on the high-temperature and high-pressure emissions and reduces the pressure and temperature of the emissions, reducing the destructive force thereof on other structures, thereby further enhancing the safety of the battery.

At present, the protective component is typically fixed to the box of the battery using bolts, which involves complex processing and assembly. Additionally, performing sealing between the protective component and the box to ensure the air-tightness of the battery can be challenging. A poor sealing effect between the protective component and the box of the battery may lead to sealing failure due to the generation of gaps at local regions during battery use, which may cause foreign objects to enter into the box through the gaps between the protective component and the box of the battery, affecting the normal use of the battery, and reducing the safety of the battery.

Therefore, a box of a battery is provided in the embodiments of this application, where the box includes a first portion, which is an integrated hollow structure with an opening at one end. This means that no additional protective component needs to be provided for the box, in other words, the protective component and a side wall of the box can be provided as an integrated structure. This not only ensures the air-tightness of the box, further enhancing the safety of the battery, and moreover, it eliminates the use of bolts and other connecting members, as well as the need for methods such as welding or adhesive bonding for connection. The structure is simple, easy to manufacture, and can also reduce the weight of the box. In addition, the first portion includes a plurality of walls, and at least one of the plurality of walls is provided with a reinforcement member. Due to the integrated structure of the first portion, the plurality of walls included by the first portion are no longer provided with connecting members such as bolts. Additionally, there are no connecting regions such as weld seams between protective components and side walls of the box. Therefore, a reinforcement member can be provided on any one or more of the plurality of walls, and the reinforcement member will not be limited by connecting members such as bolts, or connecting regions such as weld seams. This facilitates processing and increases the structural strength of the wall where the reinforcement member is located, thereby further enhancing the structural strength of the box and the structural strength and safety of the battery.

The technical solutions described in the embodiments of this application are all applicable to a variety of electric devices using a battery.

The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric device being a vehicle is used as example for description of the following embodiments.

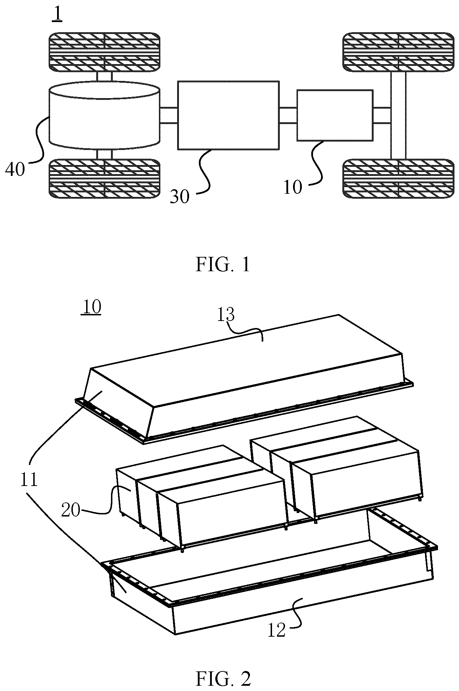

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 40, a controller 30, and a battery 10 may be provided inside the vehicle 1, where the controller 30 is configured to control the battery 10 to supply power to the motor 40. For example, the battery 10 may be provided at the bottom, front, or rear of the vehicle 1. The battery 10 may be configured to supply power to the vehicle 1. For example, the battery 10 may be used as an operational power source for the vehicle 1 that is configured for a circuit system of the vehicle 1, for example, to satisfy power needs of start, navigation, and running of the vehicle 1. In another embodiment of this application, the battery 10 can be used as not only the operational power source for the vehicle 1, but also as a driving power source for the vehicle 1, replacing or partially replacing fossil fuel or natural gas to provide driving traction for the vehicle 1.

To meet different power usage requirements, the battery may include multiple battery cells, and the multiple battery cells may be connected in series, parallel, or series-parallel, where being connected in series-parallel means a combination of series and parallel connections. The battery may also be called a battery pack. For example, multiple battery cells may be connected in series, parallel, or series-parallel to form a battery module first, and then multiple battery modules are connected in series, parallel, or series-parallel to form a battery. In a word, the multiple battery cells may be directly combined into a battery, or may first be combined into battery modules that are then combined into a battery.

FIG. 2 is a schematic structural diagram of a battery 10 according to an embodiment of this application. As shown in FIG. 2, the battery 10 may further include a box 11. Inside of the box 11 is a hollow structure. The multiple battery cells 20 are accommodated in the middle frame in the box 11. As shown in FIG. 2, the box 11 may include two portions, which are herein referred to as a first portion 12 and a second portion 13 respectively, and the first portion 12 and the second portion 13 are snap-fitted together to form a hollow structure. Shapes of the first portion 12 and the second portion 13 may be determined based on a shape of the combination of the battery cells 20 accommodated inside. At least one of the first portion 12 and the second portion 13 is provided with an opening. For example, as shown in FIG. 2, the first portion 12 and the second portion 13 each may be a hollow cuboid and have only one face with an opening, where an opening of the first portion 12 and an opening of the second portion 13 are opposite each other, and the first portion 12 and the second portion 13 are snap-fitted to form a box 11 having an enclosed chamber.

For another example, unlike FIG. 2, it is possible that only one of the first portion 12 and the second portion 13 is a hollow cuboid with an opening, and the other may be a plate for covering the opening. For example, an example is used where the second portion 13 is a hollow cuboid and has only one face with an opening and the first portion 12 is a plate. Therefore, the first portion 12 covers the opening of the second portion 13 to form a box 11 with an enclosed chamber. The chamber may be configured for accommodating the multiple battery cells 20. The multiple battery cells 20 are connected in parallel, series, or series-parallel, and then put into the box 11 formed after the first portion 12 and the second portion 13 are snap-fitted.

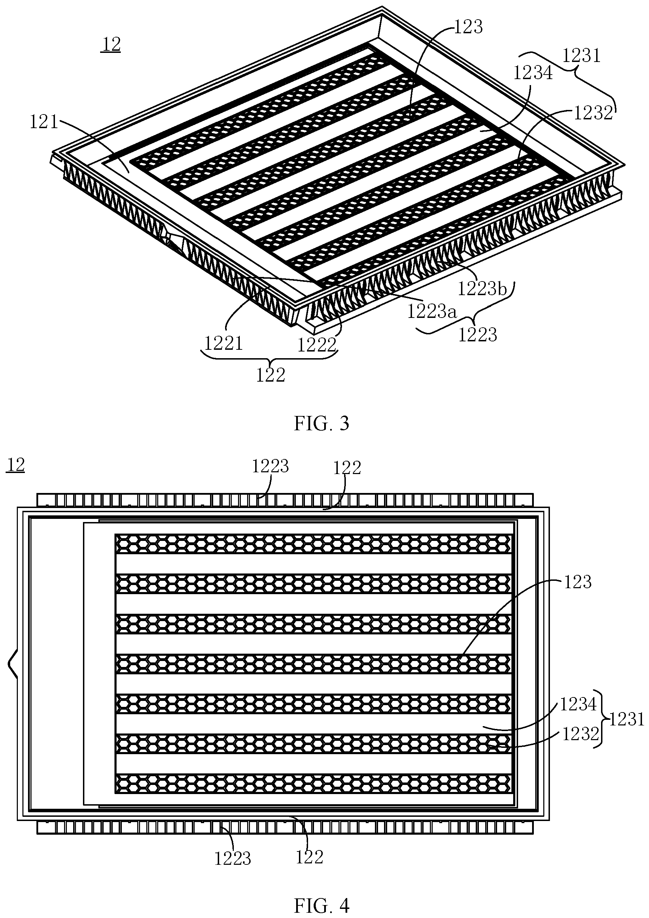

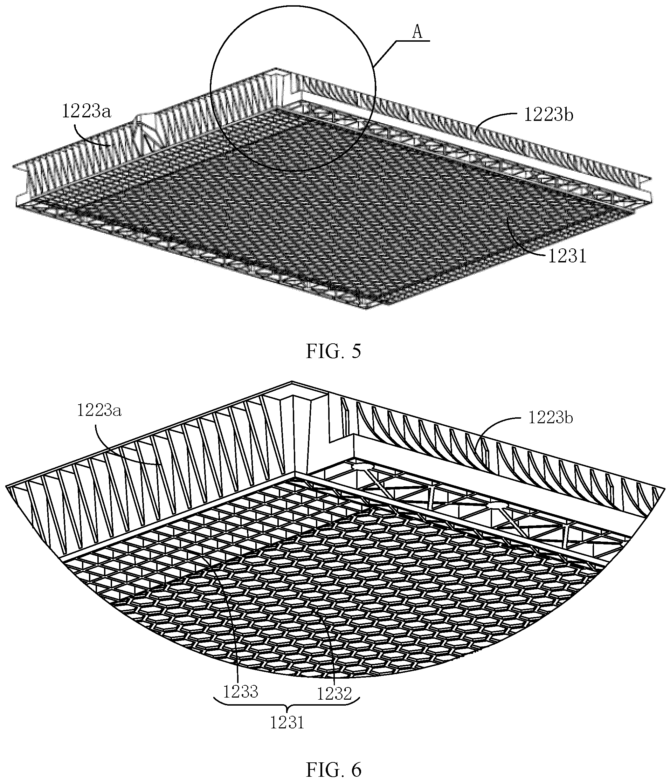

FIG. 3 is a schematic structural diagram of a first portion 12 of a box 11 according to an embodiment of this application. FIG. 4 is a schematic top view of a first portion 12 according to an embodiment of this application. FIG. 5 is another schematic structural diagram of a first portion 12 according to an embodiment of this application. For example, FIG. 5 and FIG. 3 may be schematic structural diagrams of the first portion 12 from different angles. FIG. 6 is a schematic diagram of a partial structure of a first portion 12 according to an embodiment of this application. For example, FIG. 6 is an enlarged schematic diagram of region A shown in FIG. 5.

As shown in FIGs. 3 to 6, the box 11 includes: a first portion 12, where the first portion 12 is an integrated hollow structure with an opening at one end, the first portion 12 includes a plurality of walls, and at least one wall of the plurality of walls is provided with a reinforcement member.

It should be understood that the first portion 12 in the embodiments of this application may be the first portion 12 of the box 11 as shown in FIG. 2, but the relevant description is equally applicable to the second portion 13 shown in FIG. 2. For brevity, details are not repeated herein. The description will be made only by taking the first portion 12 as an example.

The shape of the box 11 in the embodiments of this application can be configured according to the actual application. Accordingly, the shape of the first portion 12 can also be configured flexibly according to the actual application. For example, if the box 11 is a rectangle, the first portion 12 may be a rectangular structure with an opening at one end, that is, the first portion 12 includes one opening 121 and five walls. For another example, the box 11 may also be a cylinder or other shapes. This is not limited in the embodiments of this application. For ease of illustration, description in the embodiments of this application mainly takes the rectangular box 11 as an example.

The first portion 12 in the embodiments of this application is an integrated structure, that is, no additional connecting member is required for connection between two intersecting walls of the plurality of walls included in the first portion 12, and in addition, any one of the walls included in the first portion 12 is also a complete structure, and does not require splicing through connecting members.

Therefore, the first portion 12 of the box 11 of a battery 10 in the embodiments of this application is an integrated hollow structure with an opening at one end. This means that no additional protective component needs to be provided for the box 12, in other words, the protective component and a side wall 122 of the box 11 can be provided as an integrated structure. This not only ensures the air-tightness of the box, further enhancing the safety of the battery 10, and moreover, it eliminates the use of bolts and other connecting members, as well as the need for methods such as welding or adhesive bonding for connection. The structure is simple, easy to manufacture, and is also conducive to reducing the weight of the box 11. In addition, the first portion 12 includes a plurality of walls, and at least one of the plurality of walls is provided with a reinforcement member. Due to the integrated structure of the first portion 12, the plurality of walls included by the first portion 12 are no longer provided with connecting members such as bolts. Additionally, there are no connecting regions such as weld seams between protective components and side walls 122 of the box 12. Therefore, a reinforcement member can be provided on any one or more of the plurality of walls, and the reinforcement member will not be limited by connecting members such as bolts, or connecting regions such as weld seams. This facilitates processing and increases the structural strength of the wall where the reinforcement member is located, thereby further enhancing the structural strength of the box 11 and the structural strength and safety of the battery 10.

It should be understood that since the first portion 12 of the box 11 of the battery 10 in the embodiments of this application is an integrated structure, no additional protective component needs to be configured. Therefore, if a thermal management component needs to be provided in the box 11, the position of the thermal management component can be configured according to the actual application and does not need to be fixed at a position corresponding to the protective component. This provides greater flexibility and facilitates the manufacturing and assembly of the battery 10.

Optionally, the specific position of the reinforcement member provided in the first portion 12 in the embodiments of this application may be configured according to the actual application. For example, as shown in FIGs. 3 to 6, the plurality of walls include a side wall 122 of the first portion 12, where the side wall 122 is provided with a first reinforcement structure 1223, the first reinforcement structure 1223 is configured to reinforce the structural strength of the side wall 122, and the reinforcement member includes the first reinforcement structure 1223. Specifically, the side wall 122 in the embodiments of this application is a wall of the first portion 12 adjacent to the opening 121, and the first portion 12 may include at least one side wall 122. Through the provision of the first reinforcement structure 1223 on the side wall 122, the structural strength of the side wall 122 can be increased, thereby improving the structural strength and safety of the battery 10.

In the embodiments of this application, the first reinforcement structure 1223 may be provided at any position of the side wall 122. For example, as shown in FIGs. 3 to 6, the first reinforcement structure 1223 is provided on an outer surface of the side wall 122, the outer surface of the side wall 122 being a surface of the side wall 122 facing towards the exterior of the battery 10. In this way, the first reinforcement structure 1223 does not need to occupy space inside the battery 10, which is conducive to improving space utilization of the plurality of cells 20 inside the battery 10, and thus improving the energy density of the battery 10.

In the embodiments of this application, the shape of the first reinforcement structure 1223 may also be configured according to the actual application. For example, as shown in FIGs. 3 to 6, the side wall 122 of the first portion 12 is provided with a plurality of stiffeners protruding from a surface of the side wall 122, and the first reinforcement structure 1223 includes the plurality of stiffeners. The stiffeners may refer to rib-like structures projecting from the surface of the side wall 122. The provision of the plurality of stiffeners as the first reinforcement structure 1223 of the side wall 122 not only facilitates processing, but also allows for flexible adjustment of at least one of the distance between the stiffeners, the thickness of each stiffener, and the protrusion height of each stiffener according to the strength requirements of the side wall 122 to obtain an appropriate first reinforcement structure 1223 that meets the structural strength requirements of the first portion 12 while also satisfying the weight requirements of the battery 10.

It should be understood that the shape, size, and number of stiffeners provided on the side wall 122 of the embodiments of this application may all be configured according to the actual application. For example, as shown in FIGs. 3 to 6, a plurality of stiffeners are evenly distributed on the surface of the side wall 122. Specifically, for any one of the side walls 122 of the first portion 12, the side wall 122 has a plurality of evenly distributed stiffeners, that is, the side wall 122 may include a plurality of stiffeners with the same or different sizes. The plurality of stiffeners are evenly distributed on the side wall 122 according to a certain rule so as to ensure the structural stability of different locations of the side wall 122, and to avoid significant differences in structural strength at different locations of the side wall 122 due to the provision of stiffeners only in a localized region.

It should be understood that the first portion 12 of the embodiments of this application may include a plurality of side walls 122, and the first reinforcement structure 1223 of the plurality of side walls 122 may have the same or different shapes, sizes, and numbers. For example, as shown in FIGs. 3 to 6, the first portion 12 may include a plurality of side walls 122, and the plurality of side walls 122 may include a first side wall 1221 and a second side wall 1222. The first side wall 1221 and the second side wall 1222 may intersect or not; and the areas of the first side wall 1221 and the second side wall 1222 may be the same or different. The description here takes the scenario that the first side wall 1221 and the second side wall 1222 intersect and the areas of the first side wall 1221 and the second side wall 1222 are different as an example. However, this is not limited in the embodiments of this application.

Optionally, different side walls 122 of the first portion 12 may be provided with first reinforcement structures 1223 having the same or different shapes. For example, as shown in FIGs. 3 to 6, the shape of the first reinforcement structure 1223a provided on the first side wall 1221 and the shape of the first reinforcement structure 1223b provided on the second side wall 1222 may be different. Specifically, the first reinforcement structure 1223a provided on the first side wall 1221 includes a plurality of stiffeners. The height at which the plurality of stiffeners project from the first side wall 1221 gradually decreases along the direction from the opening 121 to the bottom wall 123 of the first portion 12; in contrast, the height at which the plurality of stiffeners, of the first reinforcement structure 1223b provided on the second side wall 1222, project from the second side wall 1222 gradually increases along the direction from the opening 121 to the bottom wall 123 of the first portion 12. In this way, the shape of the first reinforcement structure 1223a provided on the first side wall 1221 can be different from the shape of the first reinforcement structure 1223b provided on the second side wall 1222. On one hand, this reduces the requirement for consistency in the first reinforcement structure 1223, making it easier to process. On the other hand, it allows for flexible configuration of the shapes of the first reinforcement structures 1223 on different side walls 122 according to the actual application scenarios of the battery 10 to adapt to different application scenarios.

Optionally, the number of first reinforcement structures 1223a provided on the first side wall 1221 and the number of first reinforcement structures 1223b provided on the second side wall 1222 may be the same or different. For example, as described in FIGs. 3 to 6, the first side wall 1221 is provided with a plurality of first reinforcement structures 1223a arranged in a first direction, and the second side wall 1222 is provided with a plurality of first reinforcement structures 1223b arranged in a second direction. If the length of the first side wall 1221 along the first direction is smaller than the length of the second side wall 1222 along the second direction, the number of the plurality of first reinforcement structures 1223a on the first side wall 1221 may be less than the number of the plurality of first reinforcement structures 1223b on the second side wall 1221, where the first direction is perpendicular to the second side wall 1222 and the second direction is perpendicular to the first side wall 1221. This ensures that a distance between two adjacent first reinforcement structures 1223a among the plurality of first reinforcement structures 1223a on the first side wall 1221 is equal to a distance between two adjacent first reinforcement structures 1223b among the plurality of first reinforcement structures 1223b on the second side wall 1222, thus maintaining a relatively stable structural strength between the first side wall 1221 and the second side wall 1222.

In the embodiments of this application, other walls of the first portion 12 may also be provided with a reinforcement member. For example, the plurality of walls include a bottom wall 123 of the first portion 12, where the bottom wall 123 is provided with a second reinforcement structure 1231, the second reinforcement structure 1231 is configured to reinforce the structural strength of the bottom wall 123, and the reinforcement member includes the second reinforcement structure 1231. Specifically, the bottom wall 123 in the embodiments of this application is a wall of the first portion 12 opposite the opening 121. The bottom wall 123 of the first portion 12 is typically configured to support a plurality of battery cells 20 within the box 11, that is, the bottom wall 123 needs to bear the weight of the plurality of battery cells 20. Therefore, the bottom wall 123 generally needs to have higher structural strength. Through the provision of the second reinforcement structure 1231, the structural strength of the bottom wall 123 can be increased, thereby improving the structural strength and safety of the battery 10. In addition, considering that when the battery 10 is installed in a vehicle, the bottom wall 123 of the battery 10 may be damaged by external forces, for example, it may be subjected to external impacts by particles such as gravel. Therefore, the addition of the second reinforcement structure 1231 may increase the structural strength of the bottom wall 123, preventing the box 11 from being damaged by the impact of the external forces, and thus improving the safety of the battery 10.

It should be understood that the second reinforcement structure 1231 in the embodiments of this application may be realized in various ways. For example, as shown in FIGs. 3 to 6, the second reinforcement structure 1231 includes a honeycomb structure 1232, that is, a honeycomb structure 1232 is provided on the bottom wall 123. The honeycomb structure 1232 is relatively stable, evenly distributes forces, and can enhance the structural strength and stability of the bottom wall 123, while being easy to manufacture.

Furthermore, for example, as shown in FIGs. 3 to 6, the second reinforcement structure 1231 may further include a reinforcement structure of another shape, for example, it may also include a rectangular structure 1233, which is easy to manufacture and can also improve the structural strength of the bottom wall 123.

Optionally, different regions of the bottom wall 123 may be provided with second reinforcement structures 1231 of the same or different shapes. For example, as shown in FIGs. 3 to 6, different regions of the bottom wall 123 may be provided with second reinforcement structures 1231 of different shapes, for example, the second reinforcement structure 1231 may include a honeycomb structure 1232 and a rectangular structure 1233 to adapt to different application environments. Alternatively, different from FIGs. 3 to 6, the bottom wall 123 may be provided with the same second reinforcement structure 1231, for example, the second reinforcement structure 1231 may include only a honeycomb structure 1232 for ease of processing.

In the embodiments of this application, the second reinforcement structure 1231 may also be provided in other ways. For example, as shown in FIGs. 3 to 6, at least one beam 1234 is provided on a side of the bottom wall 123 facing towards the interior of the battery 10, and the second reinforcement structure 1231 includes the at least one beam 1234. The beam 1234 is provided in a simple manner for easy processing. Each beam 1234 may be provided in a plate-like structure to be stacked with the bottom wall 123, so that the beam 1234 occupies a small internal space of the box 11 of the battery 10 and slightly affects the space occupancy of the battery cells 20 in the battery 10. The beam 1234 can also increase the strength of the bottom wall 123, improve the ability of the bottom wall 123 to bear a plurality of the battery cells 20, and thereby improve the structural strength and safety of the battery 10.

Optionally, the sizes and positions of the plurality of beams 1234 in the embodiments of this application can be configured flexibly according to the actual application. For example, as shown in FIGs. 3 to 6, the at least one beams 1234 includes a plurality of beams 1234 spaced apart. The plurality of beams 1234 spaced apart can strengthen the structural strength of different regions of the bottom wall 123, making the bottom wall 123 more stable and improving the safety of the battery 10.

For further example, as shown in FIGs. 3 to 6, each adjacent two beams 1234 among the plurality of beams 1234 are spaced apart by an equal distance, enabling the plurality of beams 1234 to be evenly distributed. This strengthens the structural strengths of different regions of the bottom wall 123 and minimizes the risk of excessively weak structural strength in a local area of the bottom wall 123, resulting in improved stability of the bottom wall 123.

In the embodiments of this application, the material of the first portion 12 may be selected according to the actual application. For example, the material of the first portion 12 is a polymer material. In this way, the first portion can be processed in at least one of the following ways: injection molding, compression molding, blowing, and casting. Thus, an integrated first portion 12 can be obtained. In addition, compared with a first portion 12 made of metal, the first portion of polymer material is lighter in weight, which can reduce the overall weight of the battery 10.

Optionally, the polymer material in the embodiments of this application includes at least one of the following materials: thermoplastic material, thermosetting material, and composite material. This allows for flexible selection based on the specific application requirements.

The foregoing describes the box 11 of the battery 10 in the embodiments of this application; and the following describes a method and device for manufacturing a box 11 of a battery 10 in the embodiments of this application. For those not described in detail, refer to the foregoing embodiments.

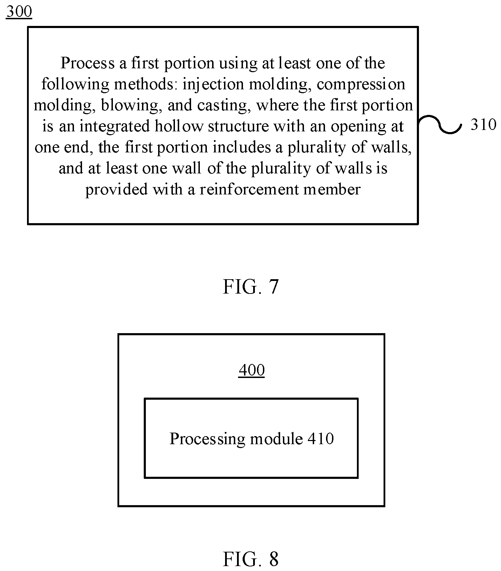

FIG. 7 is a schematic flowchart of a method 300 for manufacturing a box 11 of a battery 10 according to an embodiment of this application. As shown in FIG. 7, the method 300 may include: S310: processing a first portion 12 using at least one of the following methods: injection molding, compression molding, blowing, and casting, where the first portion 12 is an integrated hollow structure with an opening at one end, the first portion 12 includes a plurality of walls, and at least one wall of the plurality of walls is provided with a reinforcement member.

FIG. 8 is a schematic block diagram of a device 400 for manufacturing a box 11 of a battery 10 according to an embodiment of this application. As shown in FIG. 8, the device 400 may include a processing module 410. The processing module 410 is configured to process a first portion 12 using at least one of the following methods: injection molding, compression molding, blowing, and casting, where the first portion 12 is an integrated hollow structure with an opening at one end, the first portion 12 includes a plurality of walls, and at least one wall of the plurality of walls is provided with a reinforcement member.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A box (11) for a battery (10), **characterized by** comprising:
a first portion (12), wherein the first portion (12) is an integrated hollow structure with an opening at one end, the first portion comprises a plurality of walls, and at least one wall of the plurality of walls is provided with a reinforcement member.

2. The box (11) according to claim 1, **characterized in that** the plurality of walls comprise a side wall (122) of the first portion (12), the side wall (122) is provided with a first reinforcement structure (1223), the first reinforcement structure (1223) is configured to reinforce structural strength of the side wall (122), and the reinforcement member comprises the first reinforcement structure (1223).

3. The box (11) according to claim 2, **characterized in that** the first reinforcement structure (1223) is provided on an outer surface of the side wall (122), and the outer surface of the side wall (122) is a surface of the side wall (122) facing towards the exterior of the battery (10).

4. The box (11) according to claim 2 or 3, **characterized in that** the side wall (122) of the first portion (12) is provided with a plurality of stiffeners projecting from a surface of the side wall (122), and the first reinforcement structure (1223) comprises the plurality of stiffeners.

5. The box (11) according to claim 4, **characterized in that** the plurality of stiffeners are evenly distributed on the surface of the side wall (122).

6. The box (11) according to any one of claims 1 to 5, **characterized in that** the plurality of walls comprise a bottom wall (123) of the first portion (12), the bottom wall (123) is provided with a second reinforcement structure (1231), the second reinforcement structure (1231) is configured to reinforce structural strength of the bottom wall (123), and the reinforcement member comprises the second reinforcement structure (1231).

7. The box (11) according to claim 6, **characterized in that** the second reinforcement structure (1231) comprises a honeycomb structure (1232).

8. The box (11) according to claim 6 or 7, **characterized in that** at least one beam (1234) is provided on a side of the bottom wall (123) facing towards the interior of the battery (10), and the second reinforcement structure (1231) comprises the at least one beam (1234).

9. The box (11) according to claim 8, **characterized in that** the at least one beam (1234) comprises a plurality of beams (1234) spaced apart.

10. The box (11) according to any one of claims 1 to 9, **characterized in that** material of the first portion (12) is a polymer material.

11. The box (11) according to claim 10, **characterized in that** the polymer material comprises at least one of the following materials: thermoplastic material, thermosetting material, and composite material.

12. The box (11) according to any one of claims 1 to 11, **characterized in that** the box (11) further comprises:
a second portion (13) for covering the opening (121) of the first portion (12).

13. A battery (10), **characterized by** comprising:
a plurality of battery cells (20); and
the box (11) according to any one of claims 1 to 12, wherein the box (11) is configured to accommodate the plurality of battery cells.

14. An electric device, **characterized by** comprising:
the battery (10) according to claim 13, wherein the battery (10) is configured to supply electric energy to the electric device.

15. A method for manufacturing a box for a battery, **characterized by** comprising:
processing a first portion (12) using at least one of the following methods: injection molding, compression molding, blowing, and casting, wherein the first portion (12) is an integrated hollow structure with an opening at one end, the first portion (12) comprises a plurality of walls, and at least one wall of the plurality of walls is provided with a reinforcement member.

16. A device for manufacturing a box for a battery, **characterized by** comprising: a processing module, wherein the processing module is configured to:
process a first portion (12) using at least one of the following methods: injection molding, compression molding, blowing, and casting, wherein the first portion (12) is an integrated hollow structure with an opening at one end, the first portion (12) comprises a plurality of walls, and at least one wall of the plurality of walls is provided with a reinforcement member.
